(19) Europäisches Patentamt
European Patent Office
Office européen des brevets

(11) **EP 4 386 317 A1**

(12) **EUROPEAN PATENT APPLICATION**

(43) Date of publication:
**19.06.2024 Bulletin 2024/25**

(21) Application number: **22213934.7**

(22) Date of filing: **15.12.2022**

(51) International Patent Classification (IPC):
*G01C 15/00* (2006.01)    *G01S 7/497* (2006.01)

(52) Cooperative Patent Classification (CPC):
**G01C 15/002; G01S 7/4972; G01S 17/42**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hexagon Technology Center GmbH
9435 Heerbrugg (CH)**

(72) Inventors:
• **BESTLER, Simon
D-88085 Langenargen (DE)**
• **HINDERLING, Jürg
CH-9437 Marbach (CH)**
• **BENZ, Paul
CH-9444 Diepoldsau (CH)**

(74) Representative: **Kaminski Harmann
Patentanwälte AG
Landstrasse 124
9490 Vaduz (LI)**

(54) **GEODETIC SURVEYING DEVICE FOR DISPERSION COMPENSATED DISTANCE MEASUREMENT ACCORDING TO THE TWO-COLOR PROCESS**

(57)    The invention relates to a geodetic surveying device (1), which comprises a laser distance measurement module being configured to take into account a dispersive compensation by means of a two-color process. The surveying device (1) further comprises a reference channel (25) and a beam splitting arrangement (26) configured to split part of the measurement beam into the reference channel (25). The reference channel (25) comprises a wavelength determination assembly configured to provide a wavelength measurement (34) that provides measured wavelengths (33) of the two beam components (18, 19) to be used for the two-color process, wherein the surveying device (1) is configured to take into account the measured wavelengths (33) to derive the dispersive compensation.

Fig.4

EP 4 386 317 A1

**Description**

The present invention relates to a geodetic surveying device, which comprises a laser distance measurement module being configured to take into account a dispersive compensation of the atmospheric air.

Geodetic surveying devices typically emit optical radiation in the direction of the target object to be measured in order to determine the distance between the device and the target, wherein precise angle measuring means are used to determine the direction of the measurement beam to the target object. By way of example, by measuring the distance and angular position of the target, the 3D coordinates of said target, e.g. given in polar coordinates, are determined. By way of example, the distance measurement involves emitting laser radiation in the ultraviolet, visible, or near infrared spectral range, wherein the distance to the target is derived on the basis of an echo from this target as a back-reflecting or a back-scattering object. For example, the distance is determined by measuring the time-of-flight (ToF) of an emitted pulse or pulse code sequence, e.g. by precisely determining a pulse emission time and a pulse return time and/or by using a phase measurement by superimposing a reflected and detected signal and a local oscillator signal. Normally, the aiming direction of the laser measurement beam can be varied in a motorized fashion.

Modern geodetic surveying devices, especially laser scanners, are often able to carry out measurements on diffusively scattering objects, e.g. naturally present or man-made objects. However, for long range distance measurements typically so-called cooperative targets are used, which provide a specific reflective property, thereby supporting a high signal return and precise coordinate measurement. For example, cooperative targets are embodied as reflectors or retroreflectors such as cube corner reflectors, cat eye reflectors, or reflecting tapes; or as spherical tooling balls. For example, cube corner reflectors have the additional advantage to define the spatial target point with a spatial accuracy of much better than fifty micrometers in all three dimensions.

In geodesy, typical distances to be measured range from measurement distances of several meters, e.g. below 50 m, up to measurement distances of several kilometers, e.g. ten kilometers. The refractive index of air changes due to changing weather conditions, which causes a changing propagation speed of light in air due to changes in temperature, pressure and humidity. Since the distance measurement modules measure the time-of-flight of the emitted signal between the instrument and the target, the distance (raw distance) is calculated by using the speed of light and an ideal group refractive index of air of a nominal standard atmosphere and the applied laser wavelength(s). By way of example, the impact of atmospheric metrological conditions on the distance measurement is given by the equation of Ciddor and Hill. The influence on the measured raw distance lies in the range of 1 ppm/°C, 0.4 ppm/mbar, and 0.01 ppm/rh at 10°C and 0.04 ppm/rh at 50°C (the relative humidity rh is given in percent). For example, the spectral impact of the group refractive index of air referenced to a standard atmosphere is given by the equation of Edlen.

In the prior art, such atmospheric effects are often addressed by calculating compensation parameters on the basis of meteorological data, e.g. derived from an online public database, e.g. accessible by a mobile network or from separate atmospheric instruments or sensors such as thermometers, barometers, and hygrometers.

For example, the distance $D_0$ (raw measurement) directly measured by the laser distance measurement module (EDM) relates to a specific group refractive index $n_0$ referenced to a so-called standard atmosphere like 12°C, 1013.25 mbar, 60% rh. Note that the group refractive index $n_0$ depends not only on the atmospheric air gas parameters but also from the laser wavelength of the range finder. On the basis of additionally measured meteorological parameters comprising temperature $T$, atmospheric pressure p and relative humidity $RH$, the true group refractive index $n = n(T, p, RH, ....)$ can be calculated. A corrected distance $D = D_0 + \Delta D$ can then be determined, wherein

$$\Delta D = D_0 \cdot \left( \frac{n_0 - n}{n} \right).$$

Using such an atmospheric distance correction by post processing one can get a distance measuring accuracy attaining 1 ppm. However, the measured raw distance $D_0$ related to a standard atmosphere with group refractive index $n_0$ can easily deviate from the true value by 30 ppm or more when temperature and atmospheric pressure of the real atmosphere are not known or not representative over the full optical path between instrument and target. Particularly when measuring over long distances, e.g. of several kilometers, it becomes doubtful that compensation parameters can be determined reliably from meteorological data applicable at the two extreme points of the range.

Another way to address atmospheric effects relates to the use of two different lasers, e.g. a blue and a red laser, which is often referred to as so-called two-wave process, two-color process, or multi-color process. In the case of simultaneous distance measurements using at least two different electromagnetic wavelengths, in the optical and/or microwave range, atmospheric disturbance parameters can be approximately determined based on the spectral broadband dispersive behavior of the atmosphere. For example, the true distance is determined from two separately measured distances by taking into account the different changes in the refractive indices. For example, US 6,646,724 B2 discloses such an approach.

By way of example, the results of the distance measurements of the two optical carrier wavelengths are $D_r$ (using a red or infrared wavelength) and $D_b$ (using a blue or violet wavelength), and the corresponding wavelength dependent refractive indices are $n_r$ and $n_b$. The true geometrical distance $D$ is then obtained by

$$D = D_r - (D_b - D_r) \cdot \left(\frac{n_r - 1}{n_b - n_r}\right) + D_r \cdot \frac{11.27 ppmK}{mbar} \cdot eh/T,$$

whereas $T$ is the atmospheric temperature in Kelvin and $eh$ the water vapor pressure in mbar.

With the two-color process, the main part of the temperature and pressure influence is eliminated because it essentially remains in an error contribution that depends on the humidity as to be seen by the last term in the equation above and has little influence on the total distance error. For example, the order of magnitude of the humidity-dependent error contribution under typical atmospheric conditions is approx. 1 to 2 ppm, so that atmospheric data from the end points of the measured distance are sufficient to reach a distance measurement accuracy of typically better than 2 ppm. Alternatively, distance correction given by the last term of the equation above can be handled by using a hygrometric sensor inside the surveying instrument.

The actual problem of the two-color process lies in the accuracy of resolution with which the difference between the distances $D_b$ - $D_r$ has to be determined. The further apart the two carrier wavelengths are, the smaller and thus more favorable is the model parameter

$$Q = \left(\frac{n_r - 1}{n_b - n_r}\right).$$

The magnitude of the Q-factor is thus a measure of the necessary accuracy of the respective distances $D_b$ and $D_r$ in order to achieve a desired accuracy of the true geometrical distance $D$. In other words, each of the distance measurements for determining the two separate distances $D_b$ and $D_r$ has to be more accurate by the factor Q than the desired final distance $D$, which is compensated for the dispersive influence of the air.

It is therefore an object of the present invention to provide a geodetic surveying device, which has improved absolute distance measuring accuracy both for short and long measurement distance.

A further object is to provide a geodetic surveying device based on the two-color process, which has improved absolute distance measuring accuracy and which provides more efficient handling, particularly during device repositioning and in changing environmental conditions.

These objects are achieved by the realization of at least part of the characterizing features of the independent claims. Features which further develop the invention in an alternative or advantageous manner are described in some of the other features of the independent claims and in the dependent claims.

The invention relates to a geodetic surveying device comprising a base and a targeting component, which is rotatable about two alignment axes relative to the base, and angle determining means configured to generate angle data providing an orientation of the targeting component with respect to the two alignment axes. The surveying device is configured to provide a measurement according to the so-called two-color process, also referred to as two-wave process or multi-color process, for which the surveying device comprises a laser distance measurement module configured to emit a measurement beam with two different beam components of different carrier wavelengths via a beam exit at the targeting component. The two different beam components are used to carry out a dispersion compensated distance measurement to a measurement point targeted by the measurement beam, wherein the dispersion compensated distance measurement takes into account a dispersive compensation derived from raw distances measured by the two beam components.

In other words, the atmospheric dispersion compensation is derived from separately measured distances, which are derived by separate distance measurements comprising a separate distance measurement with one of the two beam components and a separate distance measurement with the other of the two beam components. The two beam components are selected such that the group refractive indices of air are different and the speed of light at the two carrier wavelengths differ accordingly. The two separate distance measurements are part of the two-color process, i.e. to deliver an accurate distance measurement to the measurement point.

Such an improved two-color process provides benefits when implemented in a geodetic surveying device embodied as total positioning system or total station. It may also be beneficial to implement such an improved two-color process in a terrestrial laser scanner or an airborne lidar unit.

By way of example, two separate laser sources are used for providing the two beam components, wherein each of the two laser sources is configured to generate one of the two beam components, respectively, wherein the surveying device comprises an optical beam guidance configured to bring the two beam components together coaxially in order to generate the measurement beam, i.e. a well-defined overlapping measurement beam.

Alternatively, the surveying device comprises a laser source and an optical wavelength converter arrangement, e.g. an optical frequency doubler or frequency tripler. The wavelength converter arrangement is configured to generate an additional radiation component from radiation emitted by the light emitter, wherein the radiation emitted by the light emitter and the additional radiation component have different wavelengths. For example, the radiation of a 808 nm wavelength laser is divided into 808 nm and 404 nm by using a carrier frequency doubler or the optical frequency of a 1065 nm laser diode is tripled to generate 1065 nm and 355 nm radiation.

According to one aspect of the invention, the surveying device comprises a reference channel and a beam splitting arrangement configured to split part of the measurement beam into the reference channel. The reference channel comprises a wavelength determination assembly configured to provide a wavelength measurement that provides measured wavelengths of the two beam components (e.g. at the instant of the dispersion compensated distance measurement), wherein the surveying device is configured to take into account the measured wavelengths to precisely derive the dispersive compensation of the atmosphere.

By way of example, the wavelength determination assembly comprises a dispersive element, e.g. an optical wedge, a diffractive grating, or a micro-structured surface element (e.g. a diffractive optical element (DOE)), and a light detection sensor embodied as line sensor, e.g. based on CCD or CMOS technology. This provides a very fast acquisition of the optical spectrum for the two beam components within a few milliseconds and, based thereof, determination of the two carrier wavelengths, e.g. by determining mean wavelengths for the two beam components by center of gravity determination.

The wavelength determination assembly may be configured to provide wavelength determination based on other concepts. For example, the wavelength of each of the two beam components can be determined using a Fabry Perot interferometer by detuning it and recording the intensity. From this, an intensity vs. wavelength curve can be determined and the carrier wavelength can be derived by finding the center wavelength. Another option would be to provide narrow-band filtering of the two beam components such that only a temperature-stable wavelength is emitted. For example, a volume Bragg grating is used in a free beam configuration or a fiber Bragg grating for a fiber-coupled setup. For wavelength filtering, a dielectric interference filter can also be used foreseen to for spatial tilting, which causes a wavelength shift. The tilt angle at maximum transmission is a measure for the absolute laser wavelength.

The surveying device may be configured to provide wavelength stabilization of the measurement beam by temperature stabilization and to control an emission wavelength of the measurement beam by using a gas absorption unit (such as a small sized gas reference cell), e.g. for regulating the emission wavelength based on an absorption line in iodine, sodium, or rubidium. For example, as laser source a semiconductor laser of one of the types Fabry-Perot (FP), distributed feedback (DFB), distributed Bragg reflector (DBR), and photonic crystal surface emitting laser (PC-SEL) is used.

In one embodiment, the wavelength determination assembly comprises a common wavelength-selective optical component arranged to lie in a common optical path of the two beam components (thereby providing wavelength selection for both of the two beam components). In particular, the wavelength determination assembly further comprises a common light detector for providing the wavelength measurement. For example, a typical required accuracy of the center wavelength is approximately 0.3 nm for an emitted laser wavelength at 405 nm.

In particular, the common wavelength-selective optical component and a light detector for providing the wavelength measurement are comprised in a monolithic structure. Alternatively, a light detector for providing the wavelength measurement is attached directly (e.g. rigidly) to the common wavelength-selective optical component. Such a compact monolithic structure can be of small size and shows a high spectral stability versus mechanical and thermal influences.

In a further embodiment, the surveying device comprises a light source configured to generate the measurement beam with the two different beam components and the monolithic structure comprises the light source. Alternatively or in addition, the light source and the light detector are arranged on the same electronics board.

For example, these setups provide high opto-mechanical stability between wavelength-selective optical component and the light detector or between the light source, the wavelength-selective optical component, and the light detector. For example, the wavelength-selective optical component is embodied as a grating or a glass prism, and a change in the angle of the measurement beam impinging on the wavelength-selective optical component causes a drift of the center of the wavelength. This problem is mitigated by using a monolithic construction or by attaching (e.g. gluing) the light detector (e.g. a CMOS or CCD) directly onto the wavelength-selective component. For example, by such a concept a small sized and precise wavelength detector with a volume of less than 30x20x10 mm$^3$ can be realized.

In a further embodiment, the surveying device is configured to carry out the wavelength measurement continuously and in parallel to the dispersion compensated distance measurement and to derive the dispersive compensation using a time averaging over multiple results of the wavelength measurement.

In a further embodiment, the surveying device is configured to carry out the wavelength measurement at intermittent points in time, e.g. wherein the wavelength measurement is then carried out in parallel to the dispersion compensated distance measurement. For example, the wavelength measurement is configured to provide the measured wavelengths of the two beam components using a time averaging. For example, the time averaging is carried out over a defined time interval before the wavelength measurement, e.g. comprising a defined amount of most recent values.

In a further embodiment, the surveying device is configured to determine a data history on the basis of multiple results of the wavelength measurement and/or the dispersion compensated distance measurement and to use the data history to determine a measurement time point for carrying out a next wavelength measurement. For example, the data history provides for determining a trend assumption for measured wavelength values and/or distances, wherein the measurement time point is determined based on the trend assumption. Alternatively or in addition, the measurement time point is triggered in case the data history indicates a change of recently measured wavelength values and/or distances, which is larger than a defined threshold.

In a further embodiment, the surveying device is configured to calculate a theoretical ambient temperature parameter and/or a theoretical ambient pressure parameter based on the distances $D_b$ and $D_r$ measured by the two beam components and to determine plausibility information for the atmospheric corrected distance measurement. In order to determine the plausibility information the surveying device is configured to carry out a comparison between the theoretical ambient temperature parameter and an effective ambient temperature parameter and/or between the theoretical ambient pressure parameter and an effective ambient pressure parameter, wherein the effective ambient temperature parameter is determined by a temperature sensor of the surveying device and the effective ambient pressure parameter is determined by a pressure sensor of the surveying device, respectively. Alternatively or in addition, the surveying device is configured to carry out a comparison between the theoretical ambient temperature parameter and/or the theoretical ambient pressure parameter with online values from a weather station, e.g. accessible in real-time by a mobile network.

For example, the plausibility information is determined by taking into account a plausibility criterion for the deduced theoretical ambient temperature parameter and/or the deduced theoretical ambient pressure parameter in light of the effective ambient temperature parameter and/or the effective ambient pressure parameter.

In particular, the surveying device is configured to use the plausibility information to trigger the wavelength measurement and/or to provide a measure of the quality of the dispersion compensated distance measurement. For example, the measure of the quality provides a measure on accuracy and/or reliability of the dispersion compensated distance measurement and/or the measured wavelengths.

By way of example, the surveying device comprises a temperature sensor and a fan configured to blow ambient air past the temperature sensor. The temperature sensor is shaded and protected from heat of the surveying device, e.g. generated by the electronics and the laser source of the surveying device and/or by solar irradiation onto the device.

The refractive index of air mainly depends on three factors, i.e. temperature, pressure and humidity content. In case when only pressure and temperature influences are assumed, then the use of two distance measurements at two different carrier wavelengths may be sufficient for determining the plausibility information and to derive the true geometrical distance. However, in order to consider a more detailed impact of the metrological condition, i.e. also the influence of humidity (content of water vapor in air), a further measurement with a third wavelength is necessary.

Accordingly, in a further embodiment, the surveying device is configured to provide a further beam component of the measurement beam, which has a different carrier wavelength than the two beam components, and the surveying device is configured to calculate a theoretical ambient humidity parameter (e.g. partial pressure of water vapor in air) based on the distances measured by the two beam components and the further beam component. Here, the surveying device is configured to determine the plausibility information by taking into account a comparison between the theoretical ambient humidity parameter with an effective ambient humidity parameter determined by a humidity sensor of the surveying device. Alternatively or in addition, the surveying device is configured to determine the plausibility information by taking into account a comparison between the theoretical ambient humidity parameter with online values from nearby a weather station.

In a further embodiment, a three color process is used to determine the true geometric distance. The third beam component of the measurement beam, which has a different carrier wavelength than the two beam components, enables the surveying device to calculate the actual ambient humidity parameter and thus the water vapor influence on the actual group refractive index of air. Potential carrier wavelengths for the third beam component are wavelengths in spectral regions of water vapor absorption bands, for example at 823 nm +/-10 nm or at 940 nm +/-10 nm. The content or mixing ratio of water vapor can directly be deduced by a transmission measurement of the air using the third beam component whereas the signal is compared to a spectrally nearby beam component (e.g. one of the two beam components) or alternatively by a third distance measurement (by the time-of-flight method) with including the local dispersive effect inside the absorption band to derive the content of water vapor in air.

The two-color process is used to determine the true absolute distance. Even without the problem of atmospheric influence, very accurate distance measurement arrangements as such typically require a high level of calibration effort and high electro-optical and opto-mechanical stability. Similarly to the problem of atmospheric compensation, this leads to increased setup and calibration effort when setting up or repositioning the surveying device or when faced with changing ambient and device internal temperatures. Especially during the warm-up of the device, the temperature and thus the opto-mechanical arrangement can change quickly.

According to a further aspect of the invention, the problem of accurate distance measurement calibration as such is addressed in that the surveying device is configured to provide a further calibration functionality, which comprises: determining whether a distance currently measured by the measurement beam is below a defined threshold distance, e.g. wherein the defined threshold distance is shorter than 50 m; in a situation when the distance currently measured by the measurement beam is below the defined threshold distance, carrying out a separate distance measurement with one of the two beam components and a separate distance measurement with the other of the two beam components, thereby determining separately measured distances; and determining calibration parameters for distance measurement calibration of the separate distance measurements, by comparing the separately measured distances and using an assumed identical dispersion influence and an assumed identical measurement distance for the two beam components (the two laser wavelengths). The surveying device is configured to use the calibration parameters to derive the true geometrical distance to the measurement point from the two measurement distances.

By way of example, in combination with the improved two-color process as described above, the further calibration functionality described above (e.g. for dispersion free distance measuring as such) provides further improved distance measuring accuracy, particularly for long measurement distances. Also on its own, this calibration functionality provides benefits over dispersion compensated distance measuring processes of the prior art. For example, it provides more efficient handling during device repositioning and reduced start-up time until the device is ready after repositioning.

In a further embodiment, the determining whether a distance currently measured by the measurement beam is below a defined threshold distance is carried out automatically when the dispersion compensated distance measurement is carried out, e.g. the precise recalibration of the internal distance offset of the measurement module with an accuracy of better than 100 micrometer.

In a further embodiment, the surveying device is configured to provide a history of values of the calibration parameters and/or a history of distances used for the calibration functionality, wherein the determining of the calibration parameters is triggered based on the history of values of the calibration parameters and/or the history of the distances used for the calibration functionality. Thus, for example, it is automatically recognized whether environmental conditions (e.g. instrument temperature) or metrological conditions are rapidly changing and thus an increased rate of updating of the calibration parameters is required. By way of example, the surveying device is configured to archive calibration data, wherein the calibration data comprise the calibration parameters to derive precise values for the distances $D_b$ and $D_r$, and the length of the target distances which have been applied for the recalibration of the internal distance offset.

In a further embodiment, the surveying device is configured to take into account ambient weather data for deriving the assumed identical dispersion influence used for the determining of the calibration parameters, e.g. wherein the surveying device is configured to measure the ambient weather data and/or to derive the ambient weather data from a weather station, e.g. a public weather station accessible over a wireless network.

The invention further relates to a geodetic surveying device comprising a base and a targeting component, which is rotatable about two alignment axes relative to the base, and angle determining means configured to generate angle data providing an orientation of the targeting component with respect to the two alignment axes. The surveying device is configured to provide a measurement according to the so-called two-color process, also referred to as two-wave process or multi-color process, for which the surveying device comprises a laser distance measurement module configured to emit a measurement beam with two different beam components of different carrier wavelengths via a beam exit at the targeting component. The two different beam components are used to carry out a dispersion compensated distance measurement to a measurement point targeted by the measurement beam taking into account a dispersive compensation derived from separately measured distances. The separately measured distances are derived by separate distance measurements comprising a separate distance measurement with one of the two beam components and a separate distance measurement with the other of the two beam components (the separate distance measurements being part of the dispersion compensated distance measurement to the measurement point).

According to this aspect, the surveying device is further configured to provide a calibration functionality, which comprises: automatically determining whether a distance currently measured by the measurement beam is below a defined threshold distance; if the distance currently measured by the measurement beam is below the defined threshold distance, carrying out the separate distance measurements to determine the separately measured distances; and determining calibration parameters for distance measurement calibration of the separate distance measurements, by comparing the separately measured distances and using an assumed identical dispersion influence and an assumed identical measurement distance for the two beam components. In addition, the surveying device is configured to provide a measurement functionality, which comprises use of the calibration parameters for the dispersion compensated distance measurement to the measurement point.

In one embodiment, the determining whether a distance currently measured by the measurement beam is below a defined threshold distance is carried out automatically when the dispersion compensated distance measurement is carried out.

In a further embodiment, the surveying device is configured to provide a history of values of the calibration parameters and/or a history of distances used for the calibration functionality (e.g. for the determining of the calibration parameters), wherein the determining of the calibration parameters is triggered based on the history of values of the calibration parameters and/or the history of the distances used for the calibration functionality (e.g. wherein the history of the distances comprises previously used distance values provided by the separate distance measurements).

In a further embodiment, the surveying device is configured to take into account ambient weather data for deriving the assumed identical dispersion influence used for the determining of the calibration parameters, e.g. wherein the surveying device is configured to measure the ambient weather data and/or to derive the ambient weather data from a weather station. By way of example, for a target distance of 20 m, air temperature and air pressure are taken to apply meteorological correction to the raw distances $D_b$ and $D_r$, and these distances are assumed to be identical, e.g. $D_b = D_r + D_{off}$, where $D_{off}$ is a distance offset parameter.

In a further embodiment, the defined threshold distance is shorter than 50 m, e.g. shorter than 20 m.

The surveying device according to the different aspects of the invention is described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention. Specifically,

Fig. 1: an exemplary embodiment of a geodetic surveying device;

Fig. 2: an exemplary use case of a geodetic surveying device;

Fig. 3: a schematic depiction of a prior art realization of a so-called two-color laser distance measurement;

Fig. 4: a schematic depiction of an embodiment of a two-color distance measurement module according to the invention;

Fig. 5: a schematic depiction of an embodiment of a two-color process according to the invention;

Fig. 6: a schematic depiction of an embodiment of a three-color distance measurement module according to the invention.

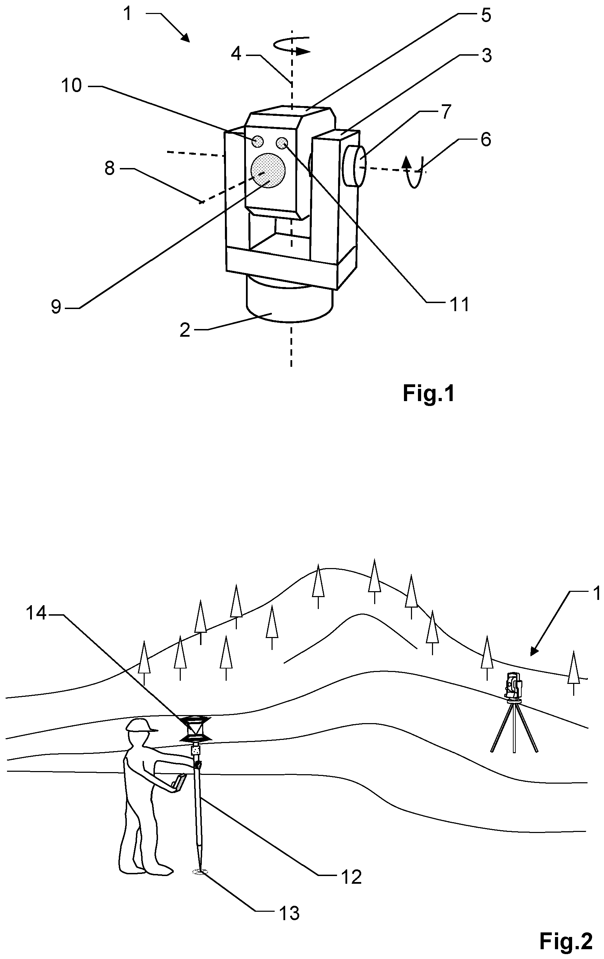

**Figure 1** illustrates an exemplary embodiment of a surveying device 1 intended to benefit from an improved two-color process according to the invention. For example, the surveying device 1 is embodied as total positioning system or total station, e.g. a tachymeter. The surveying device comprises a base 2, which is mountable onto a holding apparatus, e.g. in the form of a tripod stand (not shown). A support structure 3 is mounted on the base 2 such that it can be rotated about a vertical axis 4, wherein the support structure 3 holds a targeting component 5 which can be rotated about a horizontal axis 6. Both the support structure 3 and the targeting component 5 are rotatable in a motorized fashion, e.g. by means of a motorized shaft 7, wherein the orientations of the support structure 3 and the targeting component 5 may be determined by corresponding angle encoders (not shown).

The targeting component 5 is configured to emit a distance measuring beam along an aiming axis 8 towards a target object. By way of example, the objective lens 9 is the same for the transmission and the reception channel of the distance measuring beam. The targeting component 5 houses an opto-electronic distance meter configured to determine a distance to a single target point targeted by the aiming axis 8, based on at least part of the distance measuring beam returning from the target. By way of example, parts of the opto-electronic distance meter, e.g. the beam source, may also be arranged in the support structure 3. For example, the light source is a laser with a well-defined carrier wavelength, e.g. two laser diodes. Alternative light sources could be a fiber laser or a seeded fiber amplifier. A fiber based optical waveguide system connects the elements integrated in the support structure 3 through the shaft 7 into the targeting component 5.

Typically surveying devices further comprise additional sensors such as a so-called overview camera 10, e.g. to provide a user with an image of the scene to be measured and for an automatic coarse target search functionality. By way of example, the coarse target search functionality provides identification of a cooperative target such as a retroreflector, such that the surveying device can automatically move the targeting component 5 to point towards the cooperative target. Often a further so-called fine targeting camera, e.g. arranged co-axial to the targeting axis 8 is used to precisely point the targeting component 5 and thus the targeting axis 8 onto the center of the cooperative target (so-called locking of the beam onto the cooperative target) and to provide automatic tracking of the cooperative target. For example, the objective lens 9 is a multifunctional optical component, e.g. an imaging optics for the fine targeting camera, a transmission and receiving optics for the distance measuring unit, and optionally the front lens of a visual telescope for manually aiming the targeting axis to a target to be measured. For example, the accuracy of the aiming angle to the center of the target sign is in the range of one arcsecond or even better. The lateral spatial accuracy at the target point at one kilometer is thus less than 5 mm or less than 2 mm, which corresponds to a relative lateral accuracy of 2 ppm. Therefore, there is a need to determine also the relative longitudinal or radial target position by at least 2 ppm.

The surveying device 1 may further comprise additional sensors 11, e.g. such as range imaging sensors to provide depth images of the scene or to provide gesture control of the surveying device 1.

**Figure 2** depicts an exemplary use case of a surveying device 1, here configured as a total station, wherein the surveying device 1 and a survey pole 12 are used to measure and record or stake out different measuring positions 13 on the ground.

The survey pole 12 has a rigid, rod-shaped body with a pointer tip for contacting a measuring point 13 on the ground. The pole 12 comprises a cooperative target 14, e.g. retro-reflector means, as three-dimensional position giving means for making available the coordinative determination of a referenced position at the pole 12, wherein the cooperative target 14 is positioned at a known position relative to the tip of the pole. The total station 1 is used for determining the coordinates of the cooperative target 14, which then provides - given the known position relative to the tip and given a known orientation of the pole - the coordinates of the measuring point 13.

Modern total stations can often also be used for scanning applications such as recording point clouds of construction sites, streets or bridges. During a scanning process the distance measuring beam is swept over object surfaces by moving the targeting component of the total station with respect to two axes. Comparably to a laser scanner, the fast rotation movements are done by the targeting component which is of lower weight than the support structure. The opto-electronic distance meter is configured to record distances and, together with the angular information regarding the orientation of the targeting component, point clouds of surfaces of natural or human made objects with a very high ranging accuracy (resolution in the mm or sub-mm range at 1 km).

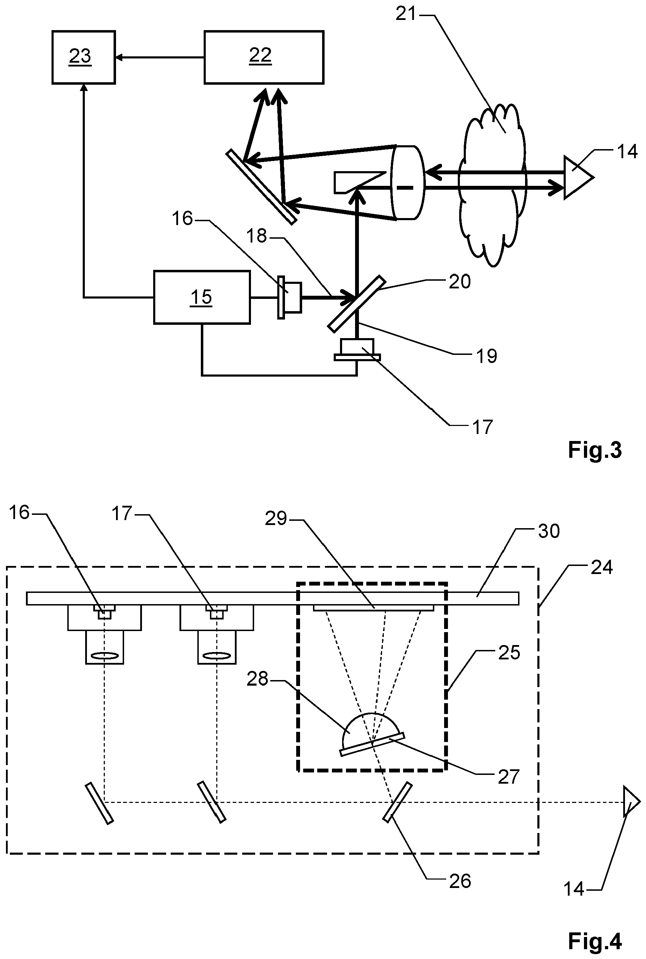

**Figure 3** schematically depicts a prior art realization of a so-called two-color laser distance measurement. A transmitter control unit 15 controls a first laser emitter 16 and a second laser emitter 17 for the generation of a first laser beam 18 and a second laser beam 19, wherein the first laser beam 18 has a shorter carrier wavelength than the second laser beam 19. A beam splitter 20 brings the two laser beams together, and the beams are then sent through the atmosphere 21 to a cooperative target 14 or an optical diffusively reflecting object surface. Returning radiation of the two laser beams is sent onto a receiver 22. A computing unit 23 is configured to receive the generated receiver signal and timing information from the transmitter control unit 15 in order to calculate the true geometrical distance to the cooperative target 14 corrected for the dispersive influence of the atmospheric air by taking into account separately measured distances, i.e. a distance measurement with the first laser beam 18 and distance measurement with the second laser beam 19.

**Figure 4** schematically depicts an embodiment of a two-color distance measurement module 24 according to the invention. The module comprises a reference channel 25 and a beam splitter 26 configured to split part of the measurement beam (e.g. 5 % of the optical power) into the reference channel 25, which comprises a wavelength determination assembly, e.g. comprising a dispersive element 27 (like an optical prism, a diffractive grating, or a DOE), a cylinder lens 28, and a photosensitive line sensor 29. The measurement beam is generated by two laser emitters 16, 17, which are arranged on the same electronics board 30. The dispersive element 27 and the line sensor 29 of the reference channel 25 are used to provide a wavelength measurement that provides measured wavelengths of the two laser beams of the two laser emitters 16, 17.

By way of example, the two laser emitters 16, 17, together with the reference channel 25 form a monolithic structure, whereas the dispersive element 27 is a small sized diffractive grating with an integrated focusing element 28 and the pixulated line sensor 29 is placed on the same electronic board as the two lasers.

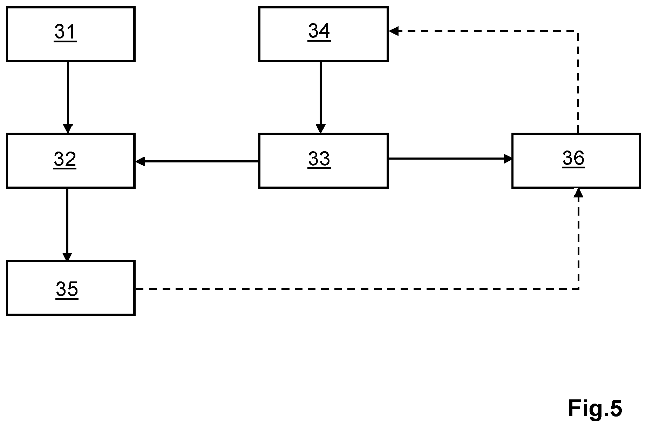

**Figure 5** schematically depicts an embodiment of a two-color process according to the invention. In a first step 31, the targeting component of the surveying device, and thereby the measurement beam, is oriented towards a target to be measured and corresponding angle data are generated. The distance to the target to be measured is determined by a two-color measurement process whereas in a second step 32 two distances are measured using the two beam components emitted to the target. The two raw distances $D_r$ (using a long wavelength) and $D_b$ (using a short wavelength) are the result of the corresponding measured time-of-flights by applying the group refractive indices $n_r$ and $n_b$. of the standard atmosphere used in the instrument, e.g. a nominal atmosphere with 12°C, 1013.25 mbar, 60% rh. To determine the needed group refractive indices $n_r$ and $n_b$ with a sufficient precision, the actual carrier wavelengths of the lasers must be known and are hereby provided by the reference channel 25. The two-color process according to the invention takes into account actual carrier wavelengths 33 of two beam components of different carrier wavelengths, namely carrier wavelengths which have been determined by a wavelength measurement 34 using a reference channel and a wavelength determination assembly as described above.

In a next step 35 the dispersion free distance $D$ can be deduced according to the two equations presented above for the Q-factor and for the geometrical distance $D$. In case of a lower required accuracy, the true geometrical distance $D$ can be deduced by the simplified equation

$$D = D_r \; - \; (D_b \; - \; D_r) \; \cdot \; \left( \frac{n_r - 1}{n_b - n_r} \right).$$

In this case the expected accuracy of distance $D$ is not better than +/-2 ppm. The influence of the humidity of the actual atmosphere relative to the applied standard atmosphere is not considered.

By way of example, to keep jitter or range noise of the deduced geometrical distance $D$ small, the two-color process is repeated several times per target point. So the standard deviation of the distance D can be reduced by the square root of the repetitions.

The results of the wavelength measurement 34, e.g. wavelength values 33 as a function of time or a change rate of the wavelength values, and thus the shift of the applied group refractive indices $n_r$ and $n_b$ used to derive the raw distances 32 ($D_r$ and $D_b$) must be handled carefully. Otherwise the dispersion free distance $D$ yields a reduced absolute accuracy beyond the specified precision. During a measurement campaign, a sequence of target positions or a trace of spatial points on a target surface is measured. Because the atmosphere does not change significantly during such a measurement campaign, it is helpful to store metadata, especially such related to the actual atmosphere. For example, besides the dispersion free geometrical distance 35 also the raw distances 32 ($D_r$ and $D_b$) and the two laser wavelengths are stored in a data history 36. When the measurement beam is directed to a further target to be measured, the data history 36 can be used to assess whether the wavelength measurement should be repeated, e.g. in case the data history indicates strong shifts or fluctuations in wavelength, or whether previous values for the carrier wavelengths are expected to still be sufficiently accurate.

In addition, the data history may comprise the distances measured by the two beam components $D_r$ and $D_b$, which can then be compared to measured ambient temperature and pressure data to carry out a plausibility check for determined dispersion free distances 35. For example, the surveying device is configured to calculate a theoretical ambient temperature parameter and/or a theoretical ambient pressure parameter based on the distances measured by the two beam components and an internal meteo sensor (e.g. an air pressure sensor), and to compare these theoretical parameters with effective ambient temperature and/or effective pressure parameters. In case a difference between theoretical and effective parameters exceeds a defined threshold criterion a new wavelength measurement 34 is triggered.

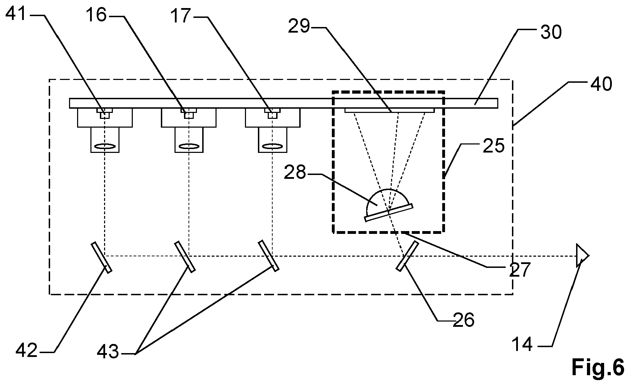

**Figure 6** schematically depicts an embodiment of a three-color distance measurement module 40 according to present invention. It comprises the inventive reference channel 25 and three light sources 16, 17, 41, i.e. the two light sources 16, 17 described above with respect to Fig. 4 and a third light source 41. The beam component generated by the third light source 41 is guided by a mirror 42 to a dichroic beam combiner 43 and aligned coaxially to the other two beam components. The beam splitter 26 is designed to split part of all three measurement beams to the line sensor 29 for wavelength measurement. The beam component provided by the third light source 41 is used to measure in combination with beam components provided by the first two light sources 16, 17 the humidity of the actual air at the instant of the dispersion compensated distance measurement.

The carrier wavelength of the third light source 41 is selected to be spectrally located in an absorption band of the atmospheric water vapor. Water vapor exhibits several absorption bands, e.g. prominent bands being located at 717 nm to 733 nm, 815 nm to 833 nm and at 930 nm to 955 nm. The group refractive index depends directly on the water vapor density. For example, there are principally two methods to measure the water vapor density, the first is to directly measure the optical transmission of the atmosphere and the second is to measure the deviation of the group refractive index from the equation given by Edlen. In combination with the first two beam components emitted to the target, it is possible to determine both a reference signal needed for determining the optical transmission as well as a reference spectral curve of the group refractive index according to the equation by Edlen of the actual atmosphere.

Although water vapor shows prominent absorption bands between 400 nm and 1100 nm, the associated molecular and electronic transition lines of water vapor in air within this spectral region are very narrow. For example, the wavelength of the third laser source 41 is chosen to be located within an absorption band of water vapor, e.g. at 725 nm. Because of the narrow spectral lines of water vapor, a stabilization of the carrier wavelength of the third laser source 41 would be needed to get a sufficient accurate transmission measurement. Preferably the third laser source 41 is embodied by a superluminescent laser diode (SLD) or superluminescent light emitting diode (SLED). Such light sources emit a radiation with a broad spectrum of typically 10 nm or 50 nm and thus covering and sensing of many absorption lines of water vapor are provided. The effect is a spectral averaging and the detected signal by the distance measurement module generates a well-defined signal amplitude of the received radiation and/or a measurement distance of low noise. Stabilization of the center wavelength of a SLD or a SLED is not necessary. The measured transmission is directly related to the molecular density of water vapor in air and the latter is proportional to the relative humidity eh. Thus the relative humidity in air can be determined by the third laser wavelength and the true geometrical Distance $D$ can be determined with an accuracy of better than 2 ppm when applying the equation above.

Although the invention is illustrated above, partly with reference to some preferred embodiments, it must be understood that numerous modifications and combinations of different features of the embodiments can be made. All of these modifications lie within the scope of the appended claims.

**Claims**

1. Geodetic surveying device (1) comprising

   • a base (2) and a targeting component (5), which is rotatable about two alignment axes (4, 6)) relative to the base (2),
   • angle determining means configured to generate angle data providing an orientation of the targeting component (5) with respect to the two alignment axes (4, 6), and
   • a laser distance measurement module configured to emit a measurement beam with two different beam components (18, 19) of different carrier wavelengths via a beam exit at the targeting component (5), and to carry out a dispersion compensated distance measurement (35) to a measurement point targeted by the measurement beam taking into account a dispersive compensation derived from distances measured by the two beam components (18, 19),

   **characterized in that**

   • the surveying device (1) comprises a reference channel (25) and a beam splitting arrangement (26) configured to split part of the measurement beam into the reference channel, wherein the reference channel comprises a wavelength determination assembly configured to provide a wavelength measurement (34) that provides measured wavelengths (33) of the two beam components (18, 19)), and
   • the surveying device (1) is configured to take into account the measured wavelengths (33) to derive the dispersive compensation.

2. Surveying device (1) according to claim 1, wherein the wavelength determination assembly comprises a common wavelength-selective optical component (27) arranged to lie in a common optical path of the two beam components (18, 19), and particularly a common light detector (22, 29) for providing the wavelength measurement (34).

3. Surveying device (1) according to claim 2, wherein

   • the common wavelength-selective optical component (27) and a light detector (22, 29) for providing the wavelength measurement (34) are comprised in a monolithic structure, or
   • a light detector (22, 29) for providing the wavelength measurement (34) is attached directly to the common wavelength-selective optical component (27).

4. Surveying device (1) according to claim 3, wherein the surveying device comprises a light source (16, 17, 41) configured to generate the measurement beam with the two different beam components (18, 19) and

   • the monolithic structure comprises the light source (16, 17, 41) and/or
   • the light source (16, 17, 41) and the light detector (22, 29) are arranged on the same electronics board (30).

5. Surveying device (1) according to one of the preceding claims, wherein

   • the surveying device (1) comprises two light emitters (16, 17, 41), wherein each of the two light emitters (16, 17, 41) is configured to generate one of the two beam components (18, 19), respectively, wherein the surveying device (1) comprises an optical beam guidance configured to bring the two beam components (18, 19) together coaxially in order to generate the measurement beam, or
   • the surveying device (1) comprises a light emitter and an optical frequency multiplier arrangement, wherein the optical frequency multiplier arrangement is configured to generate an additional radiation component from radiation emitted by the light emitter, wherein the radiation emitted by the light emitter and the additional radiation component have different wavelengths.

6. Surveying device (1) according to one of the preceding claims, wherein the wavelength determination assembly comprises a diffractive grating (27) and particularly a line sensor (29).

7. Surveying device (1) according to one of the preceding claims, wherein the surveying device is configured to carry out the wavelength measurement (34) continuously and in parallel to the dispersion compensated distance measurement (35) and to derive the dispersive compensation using a time averaging over multiple results of the wavelength measurement.

8. Surveying device (1) according to one of the preceding claims, wherein the surveying device is configured to carry out the wavelength measurement (34) at intermittent points in time, particularly wherein the wavelength measurement is then carried out in parallel to the dispersion compensated distance measurement (35).

9. Surveying device (1) according to claim 8, wherein the surveying device is configured to determine a data history (36) on the basis of multiple results of the wavelength measurement (34) and/or the dispersion compensated distance measurement (35) and to use the data history (36) to determine a measurement time point for carrying out a next wavelength measurement (34).

10. Surveying device (1) according to one of the preceding claims, wherein the surveying device is configured to calculate a theoretical ambient temperature parameter and/or a theoretical ambient pressure parameter based on the distances measured by the two beam components (18, 19) and to determine plausibility information for the dispersion compensated distance measurement (35), for which the surveying device (1) is configured

• to carry out a comparison between the theoretical ambient temperature parameter and an effective ambient temperature parameter and/or between the theoretical ambient pressure parameter and an effective ambient pressure parameter, wherein the effective ambient temperature parameter is determined by a temperature sensor of the surveying device and the effective ambient pressure parameter is determined by a pressure sensor of the surveying device, respectively, and/or
• to carry out a comparison between the theoretical ambient temperature parameter and/or the theoretical ambient pressure parameter with online values from a weather station,

particularly wherein the surveying device (1) is configured to use the plausibility information to trigger the wavelength measurement (34) and/or to provide a measure of the quality of the dispersion compensated distance measurement (35).

11. Surveying device (1) according to claim 10, wherein the surveying device is configured to provide a further beam component of the measurement beam, which has a different carrier wavelength than the two beam components (18, 19), and the surveying device is configured to calculate a theoretical ambient humidity parameter based on the distances measured by the two beam components (18, 19) and the further beam component, wherein the surveying device is configured to determine the plausibility information by taking into account

• a comparison between the theoretical ambient humidity parameter with an effective ambient humidity parameter determined by a humidity sensor of the surveying device, and/or
• a comparison between the theoretical ambient humidity parameter with online values from a weather station.

12. Surveying device (1) according to one of the preceding claims, wherein the surveying device is configured to provide a calibration functionality, which comprises:

• determining whether a distance (35) currently measured by the measurement beam is below a defined threshold distance, particularly wherein the defined threshold distance is shorter than 50 m,
• in a situation when the distance (35) currently measured by the measurement beam is below the defined threshold distance, carrying out a separate distance measurement with one of the two beam components (18, 19) and a separate distance measurement with the other of the two beam components (18, 19), thereby determining separately measured distances, and
• determining calibration parameters for distance measurement calibration of the separate distance measurements, by comparing the separately measured distances and using an assumed identical dispersion influence and an assumed identical measurement distance for the two beam components,

wherein the surveying device (1) is configured to use the calibration parameters for the dispersion compensated distance measurement (35) to the measurement point.

13. Surveying device (1) according to claim 12, wherein the determining whether a distance currently measured by the measurement beam is below a defined threshold distance is carried out automatically when the dispersion compensated distance measurement (35) is carried out.

14. Surveying device (1) according to one of claims 12 to 13, wherein the surveying device is configured to provide a history (36) of values of the calibration parameters and/or a history (36) of distances used for the calibration functionality, wherein the determining of the calibration parameters is triggered based on the history of values of the calibration parameters and/or the history of the distances used for the calibration functionality.

15. Surveying device (1) according to one of claims 12 to 14, wherein the surveying device is configured to take into account ambient weather data for deriving the assumed identical dispersion influence used for the determining of the calibration parameters, particularly wherein the surveying device is configured to measure the ambient weather data and/or to derive the ambient weather data from a weather station.

**Fig.1**

**Fig.2**

**Fig.3**

**Fig.4**

| 31 |
|----|

| 34 |
|----|

| 32 |
|----|

| 33 |
|----|

| 36 |
|----|

| 35 |
|----|

**Fig.5**

Fig.6

Europäisches
Patentamt

European
Patent Office

Office européen
des brevets

# EUROPEAN SEARCH REPORT

Application Number

EP 22 21 3934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUGGETT G R ED – PAPANIKOLAOU DIMITRIOS ET AL: "TWO-COLOR TERRAMETER", TECTONOPHYSICS, ELSEVIER, AMSTERDAM, NL, vol. 71, no. 1-04, 1 January 1981 (1981-01-01), pages 29-39, XP001012596, ISSN: 0040-1951, DOI: 10.1016/0040-1951(81)90044-5 | 1,5,7,8 | INV. G01C15/00 G01S7/497 |
| A | * pages 29,31-33; figures 1,2A,2C,3 * | 2-4,6, 9-15 | |
| | ----- | | |
| A | US 5 233 176 A (VELIGDAN JAMES T [US]) 3 August 1993 (1993-08-03) * figure 2 * | 2 | |
| | ----- | | |

|  |
|---|
| **TECHNICAL FIELDS SEARCHED (IPC)** |
| G01C G01S |

The present search report has been drawn up for all claims

| Place of search | Date of completion of the search | Examiner |
|---|---|---|
| The Hague | 14 June 2023 | de la Rosa Rivera, E |

EPO FORM 1503 03.82 (P04C01)

## ANNEX TO THE EUROPEAN SEARCH REPORT
## ON EUROPEAN PATENT APPLICATION NO.

**EP 22 21 3934**

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2023

| Patent document cited in search report | | Publication date | Patent family member(s) | Publication date |
|---|---|---|---|---|
| US 5233176 | A | 03-08-1993 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6646724 B2